# EUROPEAN PATENT SPECIFICATION

(11) **EP 3 444 090 B1**
(45) Date of publication and mention of the grant of the patent: **24.03.2021**
(21) Application number: 17782321.8
(22) Date of filing: 07.04.2017
(51) Int. Cl.: B29B 15/12, D02J 1/18, B29K 101/10

(54) **METHOD FOR MANUFACTURING FIBER REINFORCED RESIN MATERIAL AND APPARATUS FOR MANUFACTURING FIBER REINFORCED RESIN MATERIAL**
VERFAHREN ZUR HERSTELLUNG EINES FASERVERSTÄRKTEN HARZMATERIALS UND VORRICHTUNG ZUR HERSTELLUNG EINES FASERVERSTÄRKTEN HARZMATERIALS
PROCÉDÉ DE FABRICATION D'UN MATÉRIAU EN RÉSINE RENFORCÉE PAR DES FIBRES ET APPAREIL DE FABRICATION D'UN MATÉRIAU EN RÉSINE RENFORCÉE PAR DES FIBRES

(30) Priority: 11.04.2016 JP 2016078938; 16.06.2016 JP 2016120017
(43) Date of publication of application: 20.02.2019
(60) Divisional application: 21156216.0
(73) Proprietor: Mitsubishi Chemical Corporation, Tokyo 100-8251 (JP)
(72) Inventor: SAMEJIMA Tadao, Tokyo 100-8251 (JP); MIZUTORI Yukihiro, Tokyo 100-8251 (JP); KANEHAGI Junji, Tokyo 100-8251 (JP); WATANABE Yasushi, Tokyo 100-8251 (JP)
(74) Representative: Hoffmann Eitle
(86) International application number: PCT/JP2017/014530
(87) International publication number: WO 2017/179506

(56) References cited:
- WO-A1-99/35326
- WO-A1-2008/061170
- WO-A1-2011/125396
- JP-A- H01 163 219
- JP-A- 2001 020 181
- JP-A- 2005 281 464
- JP-A- 2006 144 168
- JP-A- 2006 219 780
- JP-A- 2008 254 191
- JP-A- 2014 172 998
- US-A- 5 102 690
- US-A- 5 296 064
- US-A1- 2012 213 997
- MILLER A ET AL: "IMPREGNATION TECHNIQUES FOR THERMOPLASTIC MATRIX COMPOSITES", POLYMERS AND POLYMER COMPOSITES, RAPRA TECHNOLOGY, GB, vol. 4, no. 7, 1 January 1996 (1996-01-01) , pages 459-481, XP000658227, ISSN: 0967-3911
- PADAKI S ET AL: "A simulation study on the effects of particle size on the consolidation of polymer powder impregnated tapes", COMPOSITES PART A: APPLIED SCIENCE AND MANUFACTURING, ELSEVIER, AMSTERDAM, NL, vol. 30, no. 3, 1 March 1999 (1999-03-01), pages 325-337, XP004156121, ISSN: 1359-835X, DOI: 10.1016/S1359-835X(98)00115-8

## Description

### TECHNICAL FIELD

The present invention relates to a method for manufacturing an SMC and an apparatus for manufacturing an SMC.

### BACKGROUND ART

A sheet molding compound (SMC) is a fiber reinforced resin material obtained, for example, by impregnating a thermosetting resin such as an unsaturated polyester resin in a sheet-shaped fiber bundle group formed from a plurality of fiber bundles which are obtained by cutting elongated reinforced fibers such as glass fibers and carbon fibers into a predetermined length. The SMC is used as an intermediate material for obtaining a molded article and has a property to easily flow at the time of molding by a mold. For this reason, the SMC is suitably used when those having partially different thicknesses, ribs, bosses, and the like in a molded article are formed.

The SMC is manufactured, for example, by the following method. A paste containing a thermosetting resin is coated on a sheet-shaped carrier to be conveyed in one direction to form a belt-shaped resin sheet. An elongated fiber bundle is scattered on the running resin sheet while being cut into a predetermined length to form a sheet-shaped fiber bundle group. A resin sheet is further laminated on the sheet-shaped fiber bundle group and then pressurized so that the resin is impregnated in the sheet-shaped fiber bundle group to obtain a fiber reinforced resin material (SMC).

In manufacturing the fiber reinforced resin material, a fiber bundle having a large number of filaments called a large tow that is relatively inexpensive is used in many cases in order to reduce manufacturing cost. In this case, for example, the fiber bundle is opened to be widened in a width direction thereof, the opened fiber bundle is then separated to be divided into a plurality of fiber bundles, and the separated fiber bundles are cut (for example, US 2012/0,213,997 A and JP 2006-219780 A).

Another example of the prior art can be seen in publication Miller A et Al.: "Impregnation Techniques for Thermoplastic Matrix Composites, Rapra Technology, GB, vol. 4, no. 7, 1 January 1996 (1996-01-01), pages 459-481.
In addition, a further example can be seen in document JP H01 163219 A

### SUMMARY OF THE INVENTION

### PROBLEM TO BE SOLVED BY THE INVENTION

However, in the method in which a fiber bundle after being opened is cut to form a sheet-shaped fiber bundle group and a resin is impregnated in the sheet-shaped fiber bundle group to obtain a fiber reinforced resin material (SMC) as described in Patent Literatures 1 and 2, a resin-rich part is generated in the fiber reinforced resin material so that a sufficient strength may not be obtained.

An object of the invention is to provide a method for manufacturing an SMC and an apparatus for manufacturing an SMC1 by which a fiber reinforced resin material in which generation of a resin-rich part in the fiber reinforced resin material is suppressed and which has a sufficient strength is obtained.

### MEANS FOR SOLVING PROBLEM

The invention provides a method for manufacturing an SMC and an apparatus for manufacturing an SMC which have the following configurations.
[1] A method for manufacturing an SMC, the method including: opening an elongated fiber bundle with a sizing agent attached thereto to be widened in a width direction thereof to be put into a flat state; and
   heat-setting the opened fiber bundle in the flat state by heating;
   continuously cutting the heat-set fiber bundle so that resultant cut fiber bundles are scattered on a first resin sheet to form thereon a sheet-shaped fiber bundle group;
   bonding a second resin sheet on the sheet-shaped fiber bundle group; and impregnating the sheet-shaped fiber bundle group with a resin forming the first and second resin sheet by pressurizing.
[2] The method described in [1], further including separating the opened fiber bundle to be divided in the width direction between the opening and the heat setting.
[3] An apparatus for manufacturing an SMC, the apparatus including:
   an opening section that opens an elongated fiber bundle with a sizing agent attached thereto to be widened in a width direction thereof to be put into a flat state; and
   a heat setting section that heat-sets the opened fiber bundle in the flat state by heating;
   a cutter that continuously cuts the heat-set fiber bundle and scatters resultant cut fiber bundles on a first resin sheet to form thereon a sheet-shaped fiber bundle group;
   an impregnating section that bonds a second resin sheet on the sheet-shaped fiber bundle group and impregnates the sheet-shaped fiber bundle group with a resin forming the first and second resin sheet.
[4] The apparatus for manufacturing a fiber reinforced resin material described in [3], further including a separating section that separates the opened fiber bundle to be divided in the width direction between the opening section and the heat setting section.

### EFFECT OF THE INVENTION

According to the method for manufacturing an SMC of the invention, a fiber reinforced resin material in which generation of a resin-rich part in the fiber reinforced resin material is suppressed and which has a sufficient strength is obtained.

By using the apparatus for manufacturing a fiber reinforced resin material of the invention, a fiber reinforced resin material in which generation of a resin-rich part in the fiber reinforced resin material is suppressed and which has a sufficient strength is obtained.

### BRIEF DESCRIPTION OF DRAWINGS

Fig. 1 is a schematic configuration diagram illustrating an example of an apparatus for manufacturing an SMC of the invention;
Fig. 2 is a side view describing a deflection test in the invention;
Fig. 3 is a schematic configuration diagram illustrating another example of the apparatus for manufacturing an SMC of the invention;
Fig. 4 is a schematic configuration diagram illustrating another example of the apparatus for manufacturing an SMC of the invention;
Fig. 5 is a schematic configuration diagram illustrating another example of the apparatus for manufacturing an SMC of the invention; and
Fig. 6 is a schematic configuration diagram illustrating another example of the apparatus for manufacturing an SMC of the invention.

### MODE(S) FOR CARRYING OUT THE INVENTION

A method for manufacturing a fiber reinforced resin material of the invention is a method for manufacturing a fiber reinforced resin material (SMC) by continuously cutting an elongated fiber bundle subjected to heat setting in a flat state after opening and then impregnating a resin in a sheet-shaped fiber bundle group formed from a plurality of cut fiber bundles, characterized in that a fiber bundle having a deflection amount H of less than 15 mm as measured by the following deflection test is cut.

### [First Embodiment]

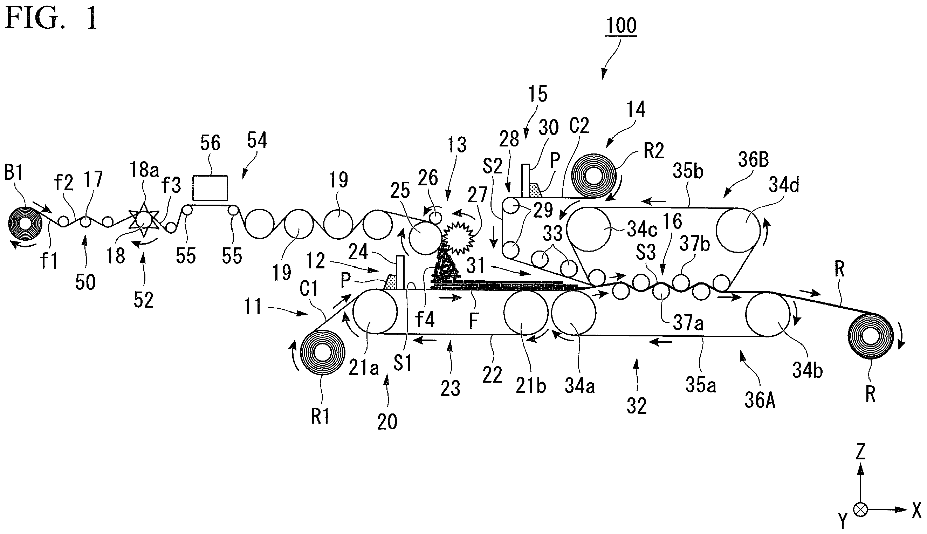

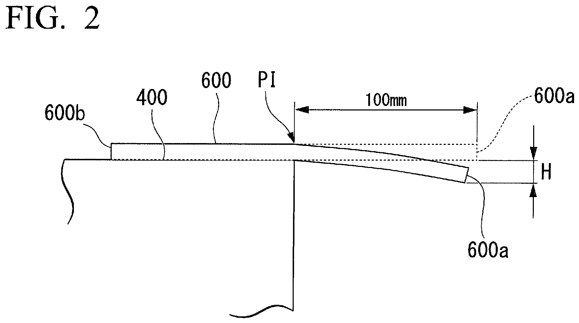

Hereinafter, an example of each of an apparatus for manufacturing a fiber reinforced resin material and a method for manufacturing a fiber reinforced resin material of the invention will be described based on Fig. 1 and Fig. 2. In the following description, an XYZ rectangular coordinate system is set, and a positional relationship of each member will be described with reference to the XYZ rectangular coordinate system as necessary.

### (Apparatus for Manufacturing Fiber Reinforced Resin Material)

An apparatus 100 for manufacturing a fiber reinforced resin material of the present embodiment (hereinafter, simply referred to as the "manufacturing apparatus 100") includes, as illustrated in Fig. 1, an opening section 50, a separating section 52, a heat setting section 54, a first canier sheet supply section 11, a first conveying section 20, a first coating section 12, a cutter 13, a second carrier sheet supply section 14, a second conveying section 28, a second coating section 15, and an impregnating section 16.

The opening section 50 is a section that opens an elongated fiber bundle f1 drawn from a bobbin B1 to be widened in a width direction (Y direction) thereof to be put into a flat state. The opening section 50 includes a plurality of opening bars 17 provided side by side with an interval in an X axis direction. In the plurality of opening bars 17, the fiber bundle f1 is allowed to sequentially pass through the respective opening bars 17 up and down in a zigzag manner. At this time, the fiber bundle f1 is widened in the width direction by a means of heating, friction, shaking, or the like by the respective opening bars 17. By opening the fiber bundle f1, a fiber bundle f2 in a flat state is obtained.

The separating section 52 is a section that separates the opened fiber bundle to be divided in the width direction (Y direction). The separating section 52 is disposed at the subsequent stage of the opening section 50 and includes a plurality of rotary blades 18. The plurality of rotary blades 18 are arranged side by side with a predetermined interval in the width direction (Y axis direction) of the opened fiber bundle f2. In addition, a plurality of blades 18a are provided side by side continuously in a circumferential direction in the respective rotary blades 18. By causing the fiber bundle f2 to pass through the rotary blades 18 while the rotary blades 18 are rotated, the plurality of blades 18a are intermittently cut through the fiber bundle f2, and the fiber bundle f2 is divided in the width direction to obtain a plurality of fiber bundles f3. However, the plurality of separated fiber bundles f3 may be in a state of being completely separated or a state of not being partially separated (a state of being bonded).

The heat setting section 54 is a section that heat-sets the opened fiber bundle in the flat state by heating. The heat setting section 54 is disposed at the subsequent stage of the separating section 52. In this example, since the separating section 52 is disposed between the opening section 50 and the heat setting section 54, the fiber bundles f3 opened and further separated are heat-set in the flat state by heating by the heat setting section 54. The heat setting section 54 includes a plurality of guide rolls 55, a heating means 56, and a plurality of godet rolls 19.

In the heat setting section 54, the fiber bundles f3 separated in the separating section 52 are conveyed in the X direction by the plurality of guide rolls 55 and heat-set in the flat state by heating by the heating means 56. In addition, the heat-set fiber bundles f3 are guided to the cutter 13 by a plurality of godet rolls 19. By heat-setting the fiber bundles f3 by the heat setting section 54, the fiber bundles f3 are maintained in the flat state until subsequent steps.

The first carrier sheet supply section 11 supplies an elongated first carrier sheet C1 drawn out from a first raw fabric roll R1 to the first conveying section 20. The first conveying section 20 includes a conveyor 23 on which an endless belt 22 is hung between a pair of pulleys 21a and 21b. The conveyor 23 revolves the endless belt 22 by rotating the pair of pulleys 21a and 21b in the same direction and conveys the first carrier sheet C1 to the right side in the X axis direction on the surface of the endless belt 22.

The first coating section 12 is located immediately above the pulley 21a side of the first conveying section 20 and includes a coater 24 that supplies a paste P containing a resin. The paste P is coated in a predetermined thickness on the surface of the first carrier sheet C1 by the first carrier sheet C1 passing through the coater 24 to form a first resin sheet S1. The first resin sheet S1 runs with the conveyance of the first carrier sheet C1.

The cutter 13 is located above the first carrier sheet C1 in the subsequent stage of the conveying direction in relation to the first coating section 12. The cutter 13 continuously cuts the heat-set fiber bundles f3 guided by the plurality of godet rolls 19 into a predetermined length and includes a guide roll 25, a pinch roll 26, and a cutter roll 27. The guide roll 25 guides the supplied fiber bundles f3 downward while rotating. The pinch roll 26 rotates in a direction opposite to that of the guide roll 25 while interposing the fiber bundles f3 with the guide roll 25. According to this, the fiber bundle f1 is drawn out from the bobbin B1. The cutter roll 27 cuts the fiber bundles f3 to have a predetermined length while rotating. Fiber bundles f4 cut into a predetermined length by the cutter 13 are dropped and scattered on the first resin sheet S1 to form a sheet-shaped fiber bundle group F.

The second carrier sheet supply section 14 supplies an elongated second carrier sheet C2 drawn out from a second raw fabric roll R2 to the second conveying section 28. The second conveying section 28 is located above the first carrier sheet C1 conveyed by the conveyor 23 and includes a plurality of guide rolls 29. The second conveying section 28 conveys the second carrier sheet C2 supplied from the second carrier sheet supply section 14 in a direction (left side in the X axis direction) opposite to that of the first carrier sheet C1, and then reverses the conveying direction to the same direction as the first carrier sheet C1 by the plurality of guide rolls 29.

The second coating section 15 is located immediately above the second carrier sheet C2 conveyed in a direction opposite to that of the first carrier sheet C1 and includes a coater 30 that supplies the paste P containing a resin. The paste P is coated in a predetermined thickness on the surface of the second carrier sheet C2 by the second carrier sheet C2 passing through the coater 30 to form a second resin sheet S2. The second resin sheet S2 runs with the conveyance of the second carrier sheet C2.

The impregnating section 16 is a section that bonds and pressurizes the second resin sheet S2 on the sheet-shaped fiber bundle group F and impregnates a resin in the sheet-shaped fiber bundle group F to obtain a fiber reinforced resin material. The impregnating section 16 is located at the subsequent stage in the first conveying section 20 with respect to the cutter 13 and includes a bonding mechanism 31 and a pressing mechanism 32. The bonding mechanism 31 is located above the pulley 21b of the conveyor 23 and includes a plurality of bonding rolls 33. The plurality of bonding rolls 33 are arranged side by side in the conveying direction in a state of being in contact with the back surface of the second carrier sheet C2 having the second resin sheet S2 formed thereon. In addition, the plurality of bonding rolls 33 are arranged such that the second carrier sheet C2 gradually approaches the first carrier sheet C1.

In the bonding mechanism 31, the first carrier sheet C1 and the second carrier sheet C2 are conveyed while being superimposed in a state where the first resin sheet S1, the sheet-shaped fiber bundle group F, and the second resin sheet S2 are interposed therebetween. Herein, the first carrier sheet C1 and the second carrier sheet C2 bonded together in a state where the first resin sheet S1, the sheet-shaped fiber bundle group F, and the second resin sheet S2 are interposed are referred to as a bonding sheet S3.

The pressing mechanism 32 is located at the subsequent stage of the bonding mechanism 31 and includes a lower conveyor 36A on which an endless belt 35a is hung between a pair of pulleys 34a and 34b and an upper conveyor 36B on which an endless belt 35b is hung between a pair of pulleys 34c and 34d. The lower conveyor 36A and the upper conveyor 36B are arranged to face each other in a state where the endless belts 35a and 35b abut each other.

The pressing mechanism 32 revolves the endless belt 35a by rotating the pair of pulleys 34a and 34b of the lower conveyor 36A in the same direction. In addition, in the pressing mechanism 32, by rotating the pair of pulleys 34c and 34d of the upper conveyor 36B in the same direction, the endless belt 35b is revolved in the opposite direction at the same speed as the endless belt 35a. According to this, the bonding sheet S3 interposed between the endless belts 35a and 35b is conveyed to the right side in the X axis direction.

The pressing mechanism 32 is provided with a plurality of lower rolls 37a and a plurality of upper rolls 37b. The plurality of lower rolls 37a are arranged side by side in the conveying direction in a state of being in contact with the back surface of the abutting portion of the endless belt 35a. Similarly, the plurality of upper rolls 37b are arranged side by side in the conveying direction in a state of being in contact with the back surface of the abutting portion of the endless belt 35b. In addition, the plurality of lower rolls 37a and the plurality of upper rolls 37b are alternately arranged side by side in the conveying direction of the bonding sheet S3.

In the pressing mechanism 32, while the bonding sheet S3 passes between the endless belts 35a and 35b, the first resin sheet S1, the sheet-shaped fiber bundle group F, and the second resin sheet S2 interposed between the first carrier sheet C1 and the second carrier sheet C2 are pressurized by the plurality of lower rolls 37a and the plurality of upper rolls 37b. At this time, the resins of the first resin sheet S1 and the second resin sheet S2 are impregnated in the sheet-shaped fiber bundle group F. According to this, a raw fabric R of the fiber reinforced resin material (SMC) is obtained. The raw fabric R can be cut into a predetermined length to be used for molding. Incidentally, the first carrier sheet C1 and the second carrier sheet C2 are peeled off from the SMC before molding the SMC.

As described above, in the manufacturing apparatus 100 of the present embodiment, the heat setting section 54 that heat-sets the opened and separated fiber bundles in the flat state by heating is provided. By heat-setting the opened and separated fiber bundles in the flat state by the heat setting section 54, as compared to the case of not performing heat setting, when the fiber bundle is cut to form a sheet-shaped fiber bundle group, flatness of the fiber bundle is maintained and the fiber bundle is less likely to be folded so that gaps generated between respective fiber bundles become smaller. According to this, formation of a resin-rich part in a fiber reinforced resin material obtained by impregnating a resin is suppressed, and thus a fiber reinforced resin material having a sufficient strength is obtained.

### (Method for Manufacturing Fiber Reinforced Resin Material)

The method for manufacturing a fiber reinforced resin material using the manufacturing apparatus 100 includes an opening step, a separating step, a heat setting step, a scattering step, and a bonding and impregnating step described below.

Opening step: a step of opening an elongated fiber bundle to be widened in a width direction thereof to be put into a flat state

Separating step: a step of separating the opened fiber bundle to be divided in the width direction

Heat setting step: a step of heat-setting the opened and separated fiber bundles in the flat state by heating

Scattering step: a step of continuously cutting the heat-set fiber bundle and scattering the plurality of cut fiber bundles in a sheet shape on a first resin sheet obtained by forming the resin in a sheet shape to form a sheet-shaped fiber bundle group

Bonding and impregnating step: a step of bonding and pressurizing a second resin sheet obtained by forming the resin in a sheet shape on the sheet-shaped fiber bundle group and then impregnating the resin in the sheet-shaped fiber bundle group to obtain a fiber reinforced resin material

### <Opening Step>

The elongated fiber bundle f1 is drawn out from the bobbin B1, and in the opening section 50, the fiber bundle f1 is caused to sequentially pass through the respective opening bars 17 up and down in a zigzag manner and is opened to be widened in the width direction to obtain the fiber bundle f2 in a flat state.

As the fiber bundle, a carbon fiber bundle is preferable. Incidentally, as the fiber bundle, a glass fiber bundle may be used. The fiber bundle is not particularly limited, and for example, a fiber bundle having the number of fibers of 3,000 or more can be used, and a fiber bundle having the number of fibers of 12,000 or more can be suitably used. A sizing agent is typically imparted to the fiber bundle in order to enhance convergence of respective fibers. The sizing agent is not particularly limited, and a known sizing agent can be used.

### <Separating Step>

In the separating section 52, the fiber bundle f2 is caused to pass while the plurality of rotary blades 18 are rotated, the plurality of blades 18a are intermittently cut through the fiber bundle f2, and the fiber bundle f2 is divided in the width direction to obtain the plurality of fiber bundles f3.

### <Heat Setting Step>

In the heat setting section 54, the opened and separated fiber bundles f3 are heat-set in the flat state by heating using the heating means 56 while the fiber bundles f3 are conveyed in the X direction by the plurality of guide rolls 55. Subsequently, the heat-set fiber bundles f3 are guided to the cutter 13 by the plurality of godet rolls 19.

An elongated reinforced fiber such as a glass fiber or a carbon fiber is typically maintained to have a tow form by a sizing agent; however, since fibers bonded to each other by the sizing agent are partially separated to decrease the convergence of the tow in the above-described opening step, the shape-retaining properties of the fiber bundles f2 and f3 are degraded. However, since the sizing agent imparted to the fiber bundle is melted and then solidified in a state of bonding the fibers to each other again by heat-setting the opened fiber bundle, the shape-retaining properties of the fiber bundles f2 and f3 are recovered, the rigidity of the opened fiber bundle is enhanced, and thus the fiber bundle is less likely to be folded or deflected.

A heating temperature in the heat setting may be appropriately set according to the kind of the sizing agent such that the sizing agent imparted to the fiber bundle is melted, and the heating temperature is preferably 85 to 180°C and more preferably 90 to 150°C. When the heating temperature is equal to or higher than the lower limit, the heat-setting effect is easily obtained. When the heating temperature is equal to or lower than the upper limit, volatilization of the sizing agent tends to be suppressed, and thus the heat-setting effect is easily obtained. In addition, by heating the fiber bundle to melt the sizing agent such that the viscosity of the sizing agent imparted to the fiber bundle is, for example, 1.5 Pa·s or less, the heat-setting effect can be obtained.

A heating time in the heat setting may be appropriately set such that the sizing agent imparted to the fiber bundle is melted, and the heating time is preferably 1 to 15 seconds and more preferably 5 to 15 seconds.

### <Scattering Step>

The elongated first carrier sheet C1 is drawn out from the first raw fabric roll R1 and supplied to the first conveying section 20 by the first carrier sheet supply section 11, and the paste P is coated in a predetermined thickness by the first coating section 12 to form the first resin sheet S1. The first resin sheet S1 on the first carrier sheet C1 is caused to run by conveying the first carrier sheet C1 by the first conveying section 20.

As a resin contained in the paste P, a thermosetting resin is preferable. The thermosetting resin is not particularly limited, and for example, an unsaturated polyester resin or the like is exemplified. A filler such as calcium carbonate, a low-shrinking agent, a release agent, a curing initiator, a thickener, or the like may be blended in the paste P.

The fiber bundles f3 guided by the plurality of godet rolls 19 are continuously cut by the cutter 13 to have a predetermined length, and the cut fiber bundles f4 are dropped and scattered on the first resin sheet S1. According to this, a sheet-shaped fiber bundle group F in which the respective fiber bundles f4 are scattered in random fiber orientations is continuously formed on the running first resin sheet S1.

In the present example, the fiber bundle f3 having a deflection amount H of less than 15 mm as measured by the following deflection test is cut by the cutter 13. When the deflection amount H of the fiber bundle f3 is less than 15 mm, flatness of the cut fiber bundles f4 is easily maintained, and the scattered fiber bundles f4 are less likely to be folded. According to this, gaps generated between the respective fiber bundles f4 in the sheet-shaped fiber bundle group F become smaller, and thus formation of a resin-rich part in a fiber reinforced resin material obtained by impregnating a resin is suppressed. Therefore, a fiber reinforced resin material having a sufficient strength is obtained.

### (Deflection Test)

As illustrated in Fig. 2, a test piece 600 having a length of 150 mm is cut out from the fiber bundle f3 to be cut, and a part from a position PI away from a first end 600a by 100 mm to a second end 600b in the length direction of the test piece 600 is placed on a plane surface 400. Then, the part away from the first end 600a by 100 mm in the test piece 600 is set to be put into a free state. Since the part away from the first end 600a by 100 mm in the test piece 600 is deflected and droops, a distance between a lower end of the first end 600a in that state and the plane surface 400 is designated as a deflection amount H (mm).

In the invention, the deflection amount H of the fiber bundle to be cut as measured in the deflection test is less than 15 mm, preferably 0 to 14 mm, and more preferably 5 to 13 mm. When the deflection amount H is equal to or more than the lower limit, a fiber reinforced resin material having a high strength is further obtained. As the deflection amount H decreases, the cut fiber bundles to be scattered at the time of forming a sheet-shaped fiber bundle group are less likely to be folded, and thus a fiber reinforced resin material having a high strength is more easily obtained.

The deflection amount H of the fiber bundle to be cut can be adjusted by adjusting the kind of a sizing agent to be used in the fiber bundle, the opening condition, or the heat-setting condition. Specifically, the deflection amount H is decreased by using a sizing agent having a higher bonding strength, increasing the thickness of the opened fiber bundle, or increasing the heating temperature of heat setting to sufficiently melt a sizing agent so that fibers are bonded to each other again.

### <Bonding and Impregnating Step>

The elongated second carrier sheet C2 is drawn out from the second raw fabric roll R2 and supplied to the second conveying section 28 by the second carrier sheet supply section 14. The paste P is coated in a predetermined thickness on the surface of the second carrier sheet C2 by the second coating section 15 to form the second resin sheet S2.

The second resin sheet S2 is caused to run by conveying the second carrier sheet C2, and in the impregnating section 16, the second resin sheet S2 is bonded onto the sheet-shaped fiber bundle group F by the bonding mechanism 31. Then, the first resin sheet S1, the sheet-shaped fiber bundle group F, and the second resin sheet S2 are pressurized by the pressing mechanism 32 so that the resins of the first resin sheet S1 and the second resin sheet S2 are impregnated in the sheet-shaped fiber bundle group F. According to this, the raw fabric R in which the fiber reinforced resin material is sandwiched with the first carrier sheet C1 and the second carrier sheet C2 is obtained.

As described above, in the method for manufacturing a fiber reinforced resin material of the present embodiment, the opened and separated fiber bundles are heat-set in the flat state by heating. By heat-setting the opened and separated fiber bundles in the flat state by heating, as compared to the case of not performing heat setting, the fiber bundles are easily maintained in the flat state. In addition, in the method for manufacturing a fiber reinforced resin material of the invention, a fiber bundle having a deflection amount H of less than 15 mm is cut to form a sheet-shaped fiber bundle group and the resin is impregnated in the sheet-shaped fiber bundle group to manufacture a fiber reinforced resin material. Therefore, when the cut fiber bundles, which are scattered at the time of forming a sheet-shaped fiber bundle group, form a sheet-shaped fiber bundle group, the flat state is maintained and folding is less likely to occur, and gaps between the respective fiber bundles can be made smaller. According to this, formation of a resin-rich part in a fiber reinforced resin material obtained by impregnating a resin is suppressed, and thus a fiber reinforced resin material having a sufficient strength is obtained.

### [Second Embodiment]

The apparatus for manufacturing a fiber reinforced resin material and the method for manufacturing a fiber reinforced resin material of the invention are not limited to the manufacturing apparatus 100 and the method using the manufacturing apparatus 100 described above. For example, in the first embodiment, although the fiber bundle, which has been subjected to opening, separating, and heat setting, is guided to the cutter by the godet roll, the opened fiber bundle may be guided by the godet roll and then be subjected to separating and heat setting. The embodiment in which the opened fiber bundle is guided by the godet roll and then be subjected to separating and heat setting has an advantage in that a defect caused by winding around a roll even when fluff is generated in the fiber bundle at the time of separating is less likely to occur, as compared to the embodiment in which the opened fiber bundle is separated and then guided to the cutter by the godet roll. In addition, it is easy to suppress that the separated fiber bundles are in close contact with each other again when guided by the godet rolls.

### (Apparatus for Manufacturing Fiber Reinforced Resin Material)

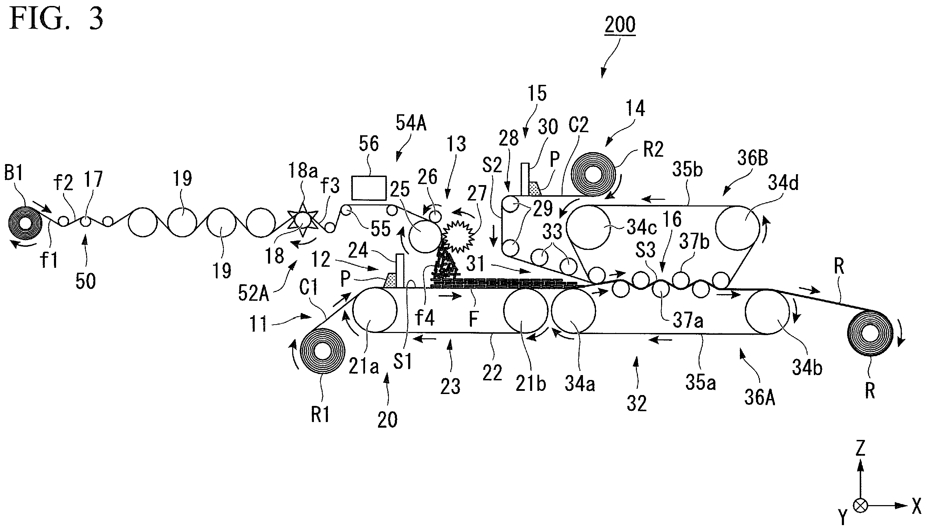

Specifically, as the apparatus for manufacturing a fiber reinforced resin material of the invention, for example, an apparatus 200 for manufacturing a fiber reinforced resin material exemplified in Fig. 3 (hereinafter, simply referred to as the "manufacturing apparatus 200") may be employed. Components in Fig. 3 identical to those in Fig. 1 are denoted by the same reference numerals and descriptions thereof are omitted. The manufacturing apparatus 200 is the same as the manufacturing apparatus 100, except that a separating section 52A and a heat setting section 54A are provided instead of the separating section 52 and the heat setting section 54.

The separating section 52A is the same as the separating section 52, except that the plurality of godet rolls 19 are provided at the previous stage of the rotary blades 18. The heat setting section 54A is the same as the heat setting section 54, except that the plurality of godet rolls 19 are not provided at the subsequent stage. In the manufacturing apparatus 200, the fiber bundle f1 drawn out from the bobbin B1 is opened by the opening section 50, the opened fiber bundle f2 is guided to the rotary blade 18 by the plurality of godet rolls 19 and separated in the separating section 52A, and then the separated fiber bundles f3 are heat-set by the heat setting section 54A and supplied to the cutter 13. In this way, the embodiment of the manufacturing apparatus 200 is the same as the embodiment of the manufacturing apparatus 100, except that the position of the plurality of godet rolls 19 is changed from the position between the heating means 56 and the cutter 13 to the position between the opening section 50 and the rotary blade 18.

Also in the manufacturing apparatus 200 of the present embodiment, the heat setting section 54A, which heat-sets the opened and separated fiber bundles in the flat state by heating, is provided. By heat-setting the opened and separated fiber bundles in the flat state by the heat setting section 54A, as compared to the case of not performing heat setting, gaps generated between respective fiber bundles when the fiber bundle is cut to form a sheet-shaped fiber bundle group become smaller. According to this, formation of a resin-rich part in a fiber reinforced resin material obtained by impregnating a resin is suppressed, and thus a fiber reinforced resin material having a sufficient strength is obtained.

### (Method for Manufacturing Fiber Reinforced Resin Material)

The method for manufacturing a fiber reinforced resin material using the manufacturing apparatus 200 includes an opening step, a separating step, a heat setting step, a scattering step, and a bonding and impregnating step similarly to the method for manufacturing a fiber reinforced resin material using the manufacturing apparatus 100.

### <Opening Step>

The opening step is performed in a similar manner as in the first embodiment.

### <Separating Step>

In the separating section 52A, the opened fiber bundle f2 is guided to the plurality of rotary blades 18 by the plurality of godet rolls 19, the fiber bundle f2 is caused to pass while the plurality of rotary blades 18 are rotated, the plurality of blades 18a are intermittently cut through the fiber bundle f2, and the fiber bundle f2 is divided in the width direction to obtain the plurality of fiber bundles f3.

### <Heat Setting Step>

In the heat setting section 54A, the opened and separated fiber bundles f3 are heat-set in the flat state by heating using the heating means 56 while the fiber bundles f3 are conveyed in the X direction by the plurality of guide rolls 55, and are supplied to the cutter 13.

### <Scattering Step and Bonding and Impregnating Step>

The scattering step and the bonding and impregnating step are performed in a similar manner as in the first embodiment.

Also in the method for manufacturing a fiber reinforced resin material of the present embodiment, the opened and separated fiber bundles are heat-set in the flat state by heating. According to this, as compared to the case of not performing heat setting, when the fiber bundle is cut to form a sheet-shaped fiber bundle group, flatness of the fiber bundle is maintained and the fiber bundle is less likely to be folded so that gaps generated between respective fiber bundles can be made smaller. Therefore, formation of a resin-rich part in a fiber reinforced resin material obtained by impregnating a resin is suppressed, and thus a fiber reinforced resin material having a sufficient strength is obtained.

### [Third Embodiment]

Although the heat-set fiber bundle is supplied to the cutter without any change in the first embodiment and the second embodiment, in the invention, the heat-set fiber bundle may be collected once.

Incidentally, the method for manufacturing a fiber reinforced resin material of the invention is not limited to the method using the manufacturing apparatus 100 or the manufacturing apparatus 200. For example, although the opened fiber bundle is supplied to the cutter without any change in the manufacturing method using the manufacturing apparatus 100 or the manufacturing apparatus 200, in the invention, the opened fiber bundle may be collected once before cutting.

### (Apparatus for Manufacturing Fiber Reinforced Resin Material)

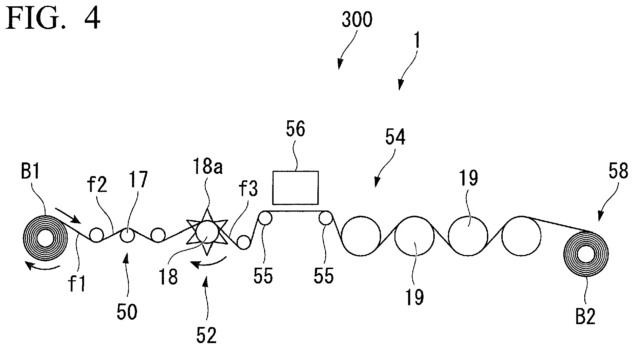

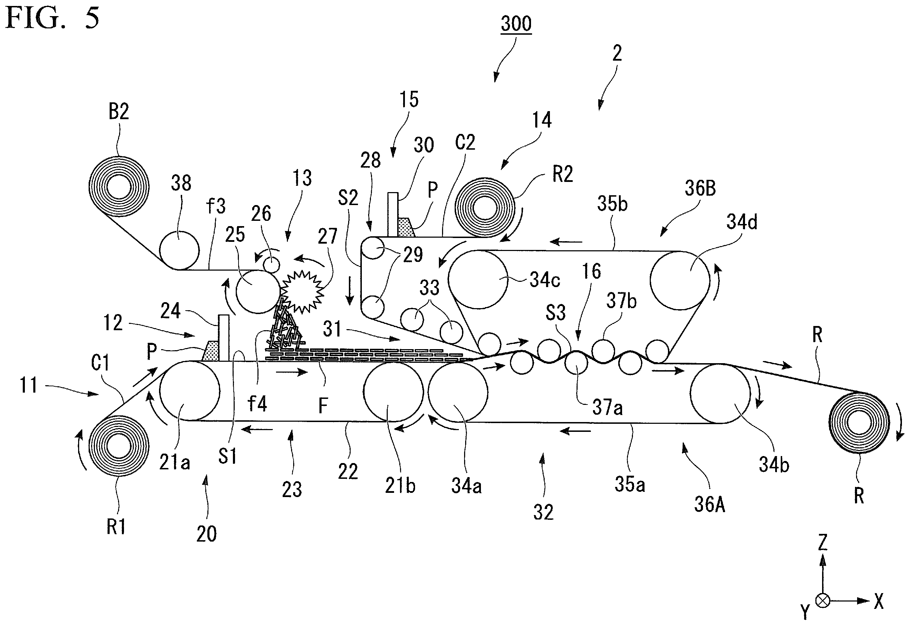

Specifically, as the apparatus for a fiber reinforced resin material of the invention, for example, an apparatus 300 for a fiber reinforced resin material exemplified in Fig. 4 and Fig. 5 (hereinafter, simply referred to as the "manufacturing apparatus 300") may be employed. Components in Fig. 4 and Fig. 5 identical to those in Fig. 1 are denoted by the same reference numerals and descriptions thereof are omitted. The manufacturing apparatus 300 includes a first manufacturing apparatus 1 and a second manufacturing apparatus 2.

The first manufacturing apparatus 1 includes the opening section 50, the separating section 52, the heat setting section 54, and a collecting section 58 in this order. The collecting section 58 can wind the separated fiber bundles f3 around the bobbin B2.

The second manufacturing apparatus 2 includes the first carrier sheet supply section 11, the first conveying section 20, the first coating section 12, the cutter 13, the second carrier sheet supply section 14, the second conveying section 28, the second coating section 15, and the impregnating section 16. In the second manufacturing apparatus 2, a guide roll 38, which guides the fiber bundle f3 drawn out from a collected product collected by being wound around the bobbin B2, is provided at the previous stage of the cutter 13. In the second manufacturing apparatus 2, the fiber bundle f3 drawn out from the collected product collected by being wound around the bobbin B2 is supplied to the cutter 13 and continuously cut into a predetermined length.

In the second manufacturing apparatus 2 of the present embodiment, a plurality of collected products may be disposed in a Y direction, and fiber bundles may be drawn out from these collected products and guided to the cutter. In this case, it is preferable that these collected products are disposed at respective individual rolls and fiber bundles are drawn out from the collected products, as compared to a case where these collected products are disposed at the same roll and fiber bundles are drawn out from the collected products. In this example, in a case where the plurality of bobbins B2 having collected the fiber bundles f3 are disposed in the Y direction, it is preferable that these bobbins B2 are disposed at respective individual rolls and the fiber bundles f3 are drawn out from the collected products. According to this, even if lengths of the fiber bundles in the respective collected products are different, a replacement operation or the like in the respective individual rolls is easily performed.

Also in the manufacturing apparatus 300 of the present embodiment, since the heat setting section 54, which heat-sets the opened and separated fiber bundles in the flat state by heating, is provided, when the sheet-shaped fiber bundle group is formed, flatness of the fiber bundle is maintained and the fiber bundle is less likely to be folded so that gaps generated between respective fiber bundles become smaller. According to this, formation of a resin-rich part in a fiber reinforced resin material obtained by impregnating a resin is suppressed, and thus a fiber reinforced resin material having a sufficient strength is obtained.

In addition, since the fiber bundles drawn out from the collecting section collecting the heat-set fiber bundle once and the collected products collected by the collecting section are supplied to the cutter, the process speed in the cutter and the impregnating section can be controlled regardless of the process speed in the opening section. Therefore, the opening operation of the fiber bundle becomes rate-limiting, and thus it is also possible to suppress decrease in the process speed in the scattering section and the impregnating section.

### (Method for Manufacturing Fiber Reinforced Resin Material)

The method for manufacturing a fiber reinforced resin material using the manufacturing apparatus 300 includes an opening step, a separating step, a heat setting step, a collecting step, a scattering step, and a bonding and impregnating step described below.

Opening step: a step of opening an elongated fiber bundle f1 to be widened in a width direction thereof to obtain a fiber bundle f2 in a flat state

Separating step: a step of separating the opened fiber bundle f2 to be divided in the width direction to obtain fiber bundles f3

Heat setting step: a step of heat-setting the fiber bundles f3 in the flat state by heating

Collecting step: a step of collecting the heat-set fiber bundles f3 once by winding the fiber bundles f3 around a bobbin B2 to obtain a collected product

Scattering step: a step of drawing the heat-set fiber bundles f3 out from the collected product and then continuously cutting the fiber bundles f3 and scattering a plurality of cut fiber bundles f4 in a sheet shape on a first resin sheet S1 obtained by forming the resin in a sheet shape to form a sheet-shaped fiber bundle group F

Bonding and impregnating step: a step of bonding and pressurizing a second resin sheet S2 obtained by forming the resin in a sheet shape on the sheet-shaped fiber bundle group F and then impregnating the resin in the sheet-shaped fiber bundle group F to obtain a fiber reinforced resin material

### <Opening Step, Separating Step, Heat Setting Step, and Collecting Step>

The opening step, the separating step, and the heat setting step are performed in the first manufacturing apparatus 1 in a similar manner to the first embodiment. The heat-set fiber bundles f3 are guided to the bobbin B2 by the plurality of godet rolls 19 and then wound and collected.

### <Scattering Step>

The scattering step is performed in a similar manner to the scattering step of the first embodiment, except that the separated elongated fiber bundles f3 are drawn out from the bobbin B2 and continuously cut by the cutter 13 to have a predetermined length.

### <Bonding and Impregnating Step>

The bonding and impregnating step is performed in the second manufacturing apparatus 2 in a similar manner to the first embodiment.

Also in the method for manufacturing a fiber reinforced resin material of the present embodiment, the opened and separated fiber bundles can be heat-set in the flat state by heating and the fiber bundle having a deflection amount H of less than 15 mm can be cut so that the cut fiber bundles, which are scattered at the time of forming a sheet-shaped fiber bundle group, are less likely to be folded. According to this, since gaps between the respective fiber bundles in the sheet-shaped fiber bundle group can be made smaller, it is possible to suppress that a resin-rich part is formed in the fiber reinforced resin material and strength is degraded.

### [Other Embodiments]

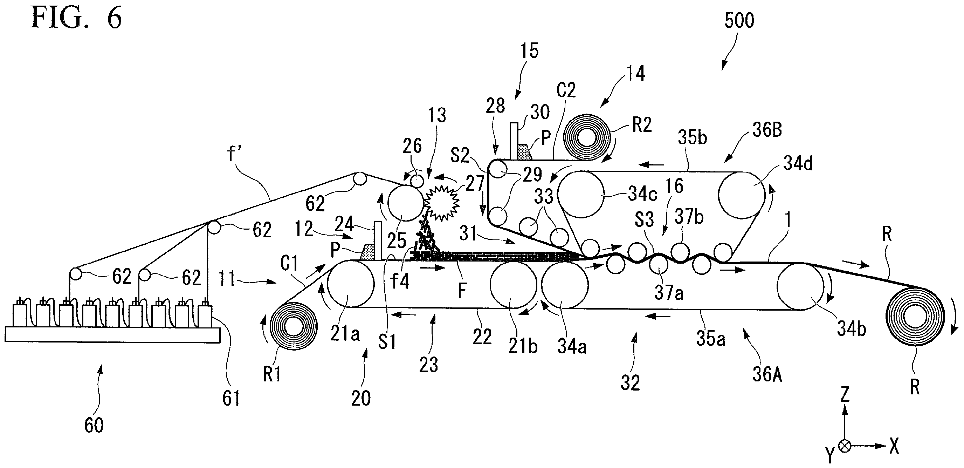

The apparatus for manufacturing a fiber reinforced resin material of the invention is not limited to the first to third embodiments. For example, the apparatus for manufacturing a fiber reinforced resin material of the invention may be a manufacturing apparatus not provided with the separating section as illustrated in Fig. 6. In addition, in a case where the apparatus for manufacturing a fiber reinforced resin material of the invention includes the collecting section, a collecting section using a known collecting means such as transferring, although not limited to winding, may be employed.

Similarly, the method for manufacturing a fiber reinforced resin material of the invention may be a method not including the separating step. In addition, in a case where the method for manufacturing a fiber reinforced resin material of the invention includes the collecting step, the method of collecting the fiber bundle is not limited to winding, and a known collecting method such as transferring may be employed. In a case where the opened fiber bundle is wound once to be collected before cutting, the opened fiber bundle may be collected and the fiber bundle drawn out from the collected product may be separated and then cut.

The method for manufacturing a fiber reinforced resin material of the invention may be a method using a manufacturing apparatus other than the manufacturing apparatus 100, the manufacturing apparatus 200, and the manufacturing apparatus 300. For example, in the case of performing separating after opening, heat setting may be performed between opening and separating. However, in the case of performing separating after opening, heat setting is preferably performed after separating.

The method for manufacturing a fiber reinforced resin material of the invention may be a method in which separating is not performed after opening.

Further, in the method for manufacturing a fiber reinforced resin material of the invention, in a case where the deflection amount H of the fiber bundle to be cut is less than 15 mm even if heat setting is not performed, heat setting may not be performed.

Furthermore, the method for manufacturing a fiber reinforced resin material of the invention may be a method in which any of opening, separating, and heat setting is not performed when the deflection amount H of the fiber bundle to be cut is less than 15 mm. For example, a method using an apparatus 500 for manufacturing a fiber reinforced resin material exemplified in Fig. 6 (hereinafter, referred to as the "manufacturing apparatus 500") may be employed.

The manufacturing apparatus 500 is the same as the manufacturing apparatus 100, except that a fiber bundle supply section 60 is provided instead of the opening section 50, the separating section 52, and the heat setting section 54. The fiber bundle supply section 60 supplies an elongated fiber bundle f to the cutter 13 by a plurality of guide rolls 62 while drawing the elongated fiber bundle f out from a plurality of bobbins 61.

Also in the manufacturing method using the manufacturing apparatus 500, when the deflection amount H of the fiber bundle f is less than 15 mm, the cut fiber bundles f4, which are scattered at the time of forming a sheet-shaped fiber bundle group, are less likely to be folded. Therefore, a resin-rich part is less likely to be formed in a fiber reinforced resin material to be obtained and a sufficient strength is obtained.

### EXAMPLES

Hereinafter, the invention will be described in detail by means of Examples; however, the invention is not limited by the following description.

### [Raw Material]

Raw materials used in the present example are described below.

### (Fiber Bundle)

α-1: a carbon fiber bundle (trade name "TR 50S15L-KL," tensile strength: 4,900 MPa, the number of filaments: 15,000, width: 7.5 mm, thickness: 0.1 mm, manufactured by Mitsubishi Rayon Co., Ltd.)

α-2: a carbon fiber bundle (trade name "TRW40 50L-KN," tensile strength: 4,120 MPa, the number of filaments: 50,000, width: 12.5 mm, thickness: 0.2 mm, manufactured by Mitsubishi Rayon Co., Ltd.)

### (Paste)

P-1: a resin composition in which with respect to 100 parts by mass of an epoxy acrylate resin (product name: NEOPOL 8051, manufactured by Japan U-Pica Company Ltd.) as a resin, 0.5 part by mass of a 75% solution of 1,1-di(t-butylperoxy)cyclohexane (product name: PERHEXA C-75 (EB), manufactured by NOF CORPORATION) and 0.5 part by mass of a 74% solution of t-butyl peroxyisopropyl carbonate (product name: Kayacarbon BIC-75, manufactured by Kayaku Akzo Corporation) were added as a curing agent, 0.35 part by mass of a phosphoric acid ester-based derivative composition (product name: MOLD WIZ INT-EQ-6, manufactured by Axel Plastics Research Laboratories, Inc.) was added as an internal mold release agent, 15.5 parts by mass of modified diphenylmethane diisocyanate (product name: COSMONATE LL, manufactured by Mitsui Chemicals, Inc.) was added as a thickener, and 0.02 part by mass of 1,4-benzoquinone was blended as a stabilizing agent

### [Deflection Test]

In each example, a test piece having a length of 150 mm was cut out from a fiber bundle immediately before the cutter 13 in the manufacturing apparatus 100, and a part from a position away from a first end by 100 mm to a second end in a length direction in the test piece was placed on a plane surface. The part away from the first end by 100 mm in the test piece was set to be put into a free state, and then a distance between a lower end of the first end in that state and the plane surface was measured as a deflection amount H (mm).

### [Example 1]

A fiber reinforced resin material was manufactured using the manufacturing apparatus 100 exemplified in Fig. 1.

The fiber bundle α-1 was used as the fiber bundle and the paste P-1 was used as the paste P. Opening was performed such that the width of the fiber bundle would be 7.5 mm and the thickness thereof would be 0.1 mm. The heat-setting condition was set to a heating temperature of 170°C and a heating time of 6 seconds. A test piece was cut out from the fiber bundle after being heat-set and before being cut and then the deflection test was carried out. As a result, the deflection amount H was 8.1 mm.

### [Example 2]

A fiber reinforced resin material was manufactured in the similar manner to Example 1, except that the opening condition was adjusted and the thickness and the deflection amount H of the fiber bundle to be cut were set as presented in Table 1.

### [Examples 3 and 4]

A fiber reinforced resin material was manufactured in the similar manner to Example 1, except that the fiber bundle α-2 was used instead of the fiber bundle α-1, the opening condition was adjusted, and the thickness and the deflection amount H of the fiber bundle to be cut were set as presented in Table 1.

### [Comparative Example 1]

In Comparative Example 1, a fiber reinforced resin material was manufactured by adjusting the opening condition similarly to Example 2, except that the fiber bundle α-1 was used as the fiber bundle and the heat-setting temperature was set to 25°C.

### [Comparative Example 2]

In Comparative Example 2, a fiber reinforced resin material was manufactured by adjusting the opening condition similarly to Example 4, except that the fiber bundle α-2 was used as the fiber bundle and the heat-setting temperature was set to 25°C.

The kind of the fiber bundle used in each example, the heating temperature of heat setting, and results of the thickness and the deflection amount H of the fiber bundle to be cut are presented in Table 1.

**[Table 1]**

| | Fiber bundle used | Heating temperature [°C] of heat setting | Fiber bundle to be cut | |
|---|---|---|---|---|
| | | | Thickness [mm] | Deflection amount H [mm] |
| Example 1 | α-1 | 170 | 0.1 | 8.1 |
| Example 2 | α-1 | 170 | 0.05 | 12.3 |
| Example 3 | α-2 | 170 | 0.2 | 12.5 |
| Example 4 | α-2 | 170 | 0.1 | 12.5 |
| Comparative Example 1 | α-1 | 25 | 0.05 | 22.5 |
| Comparative Example 2 | α-2 | 25 | 0.1 | 15.8 |

As presented in Table 1, regarding the fiber reinforced resin materials of Examples 1 to 4 in which the deflection amount H of the fiber bundle to be cut is less than 15 mm, it is possible to obtain fiber reinforced resin materials having a higher strength than the fiber reinforced resin materials of Comparative Examples 1 to 2 in which the deflection amount H is 15 mm or more.

### INDUSTRIAL APPLICABILITY

According to the method for manufacturing a fiber reinforced resin material of the invention, it is possible to obtain a fiber reinforced resin material in which generation of a resin-rich part in the fiber reinforced resin material is suppressed and which has a sufficient strength. In addition, by using the apparatus for manufacturing a fiber reinforced resin material, it is possible to obtain a fiber reinforced resin material in which generation of a resin-rich part in the fiber reinforced resin material is suppressed and which has a sufficient strength.

### EXPLANATIONS OF LETTERS OR NUMERALS

1 FIRST MANUFACTURING APPARATUS
2 SECOND MANUFACTURING APPARATUS
13 CUTTER
16 IMPREGNATING SECTION
50 OPENING SECTION
52, 52A SEPARATING SECTION
54, 54A HEAT SETTING SECTION
100, 200, 300, 500 APPARATUS FOR MANUFACTURING FIBER REINFORCED RESIN MATERIAL

## Claims

1. A method for manufacturing an SMC, the method comprising:
opening an elongated fiber bundle with a sizing agent attached thereto to be widened in a width direction thereof to be put into a flat state; and
heat-setting the opened fiber bundle in the flat state by heating;
continuously cutting the heat-set fiber bundle so that resultant cut fiber bundles are scattered on a first resin sheet to form thereon a sheet-shaped fiber bundle group;
bonding a second resin sheet on the sheet-shaped fiber bundle group; and
impregnating the sheet-shaped fiber bundle group with a resin forming the first and second resin sheet by pressurizing.

2. The method according to claim 1, further comprising separating the opened fiber bundle to be divided in the width direction between the opening and the heat setting.

3. An apparatus for manufacturing an SMC, the apparatus comprising:
an opening section (50) that opens an elongated fiber bundle with a sizing agent attached thereto to be widened in a width direction thereof to be put into a flat state; and
a heat setting section (54) that heat-sets the opened fiber bundle in the flat state by heating;
a cutter (13) that continuously cuts the heat-set fiber bundle and scatters resultant cut fiber bundles on a first resin sheet to form thereon a sheet-shaped fiber bundle group;
an impregnating section (16) that bonds a second resin sheet on the sheet-shaped fiber bundle group and impregnates the sheet-shaped fiber bundle group with a resin forming the first and second resin sheet.

4. The apparatus according to claim 3, further comprising a separating section (52) that separates the opened fiber bundle to be divided in the width direction between the opening section and the heat setting section.

## Patentansprüche

1. Verfahren zur Herstellung eines SMC, wobei das Verfahren umfasst:
Öffnen eines länglichen Faserbündels mit einem daran befestigten Schlichtemittel, das in einer Breitenrichtung desselben verbreitert werden soll, um es in einen flachen Zustand zu bringen; und
Thermofixieren des geöffneten Faserbündels im flachen Zustand durch Erhitzen;
kontinuierliches Schneiden des thermofixierten Faserbündels, so dass resultierende geschnittene Faserbündel auf einer ersten Harzplatte verstreut werden, um darauf eine plattenförmige Faserbündelgruppe zu bilden;
Aufkleben einer zweiten Harzplatte auf die plattenförmige Faserbündelgruppe; und
Imprägnieren der plattenförmigen Faserbündelgruppe mit einem Harz, die erste und zweite Harzplatte durch Druckbeaufschlagung bildend.

2. Verfahren nach Anspruch 1, weiter umfassend Trennen des geöffneten, zu teilenden Faserbündels in der Breitenrichtung zwischen der Öffnung und der Thermofixierung.

3. Einrichtung zur Herstellung eines SMC, wobei die Einrichtung umfasst:
einen Öffnungsabschnitt (50), der ein längliches Faserbündel mit einem daran befestigten Schlichtemittel öffnet, um es in einer Breitenrichtung desselben zu verbreitern, um es in einen flachen Zustand zu bringen; und
einen Thermofixierabschnitt (54), der das geöffnete Faserbündel durch Erhitzen im flachen Zustand thermofixiert;
einen Cutter (13), der das thermofixierte Faserbündel kontinuierlich schneidet und resultierende geschnittene Faserbündel auf einer ersten Harzplatte verstreut, um darauf eine plattenförmige Faserbündelgruppe zu bilden;
einen Imprägnierabschnitt (16), der eine zweite Harzplatte auf die plattenförmige Faserbündelgruppe aufklebt und die plattenförmige Faserbündelgruppe mit einem Harz imprägniert, die erste und zweite Harzplatte bildend.

4. Einrichtung nach Anspruch 3, weiter umfassend einen Trennabschnitt (52), der das geöffnete, zu teilende Faserbündel in der Breitenrichtung zwischen dem Öffnungsabschnitt und dem Thermofixierabschnitt trennt.

## Revendications

1. Procédé de fabrication d'un mélange à mouler en feuille (SMC), le procédé comprenant :
l'ouverture d'un faisceau de fibres allongées auquel est fixé un agent d'encollage pour qu'il soit élargi dans un sens de sa largeur pour être mis dans un état plat ; et
la thermofixation du faisceau de fibres ouvert dans l'état plat par chauffage ;
le découpage continu du faisceau de fibres thermofixé de sorte que les faisceaux de fibres découpés obtenus soient répartis sur une première feuille de résine pour y former un groupe de faisceaux de fibres en forme de feuille ;
la liaison d'une seconde feuille de résine sur le groupe de faisceaux de fibres en forme de feuille ; et
l'imprégnation du groupe de faisceaux de fibres en forme de feuille avec une résine formant la première et la seconde feuille de résine par mise sous pression.

2. Procédé selon la revendication 1, comprenant en outre la séparation du faisceau de fibres ouvert pour qu'il soit divisé dans le sens de la largeur entre l'ouverture et la thermofixation.

3. Appareil de fabrication d'un SMC, l'appareil comprenant :
une section d'ouverture (50) qui ouvre un faisceau de fibres allongées auquel est fixé un agent d'encollage afin qu'il soit élargi dans un sens de sa largeur pour être mis dans un état plat ; et
une section de thermofixation (54) qui assure la thermofixation du faisceau de fibres ouvert dans l'état plat par chauffage ;
un dispositif de découpage (13) qui découpe en continu le faisceau de fibres thermofixé et répartit les faisceaux de fibres découpés obtenus sur une première feuille de résine pour y former un groupe de faisceaux de fibres en forme de feuille ;
une section d'imprégnation (16) qui lie une seconde feuille de résine sur le groupe de faisceaux de fibres en forme de feuille et imprègne le groupe de faisceaux de fibres en forme de feuille avec une résine formant la première et la seconde feuille de résine.

4. Appareil selon la revendication 3, comprenant en outre une section de séparation (52) qui sépare le faisceau de fibres ouvert pour qu'il soit divisé dans le sens de la largeur entre la section d'ouverture et la section de thermofixation.
